# EUROPEAN PATENT APPLICATION

(11) **EP 0 992 441 A1**
(43) Date of publication of application: **12.04.2000**
(21) Application number: 99203294.6
(22) Date of filing: 08.10.1999
(51) Int. Cl.: B65G 61/00

(54) **Apparatus for loading and/or unloading stacked products**

(30) Priority: 09.10.1998 NL 1010279
(71) Applicant: DIAMOND AUTOMATIONS, INC., Farmington, Michigan 48335 (US)
(72) Inventor: Strijbos, Frank Peter Johan, 5976 PK Kronenberg (NL)
(74) Representative: Metman, Karel Johannes

(57) **Abstract**

An apparatus (1) for loading and/or unloading stacked products, for example egg trays onto and/or from a pallet (9), comprises a column (1) displaceable in horizontal direction. A horizontally positioned arm (3) is displaceable along the column (1) in vertical direction and includes a support (5) for receiving the stacked products. Means (8) are provided for supplying and/or discharging the stacked products. The column (1) is mounted to rails (2a;2b). The control and drive devices necessary for operating the apparatus are received in the column (1) so that it can be displaced and operated independently.

## Description

The invention relates to an apparatus for loading and/or unloading stacked products, for example egg trays onto and/or from a pallet, comprising a column displaceable in horizontal direction, a horizontally positioned arm displaceable along the column in vertical direction and including a support for receiving the stacked products, as well as means for supplying and/or discharging the stacked products.

Such an apparatus is for example known from US-A-4,242,025 showing a horizontally displaceable column received with its lower and upper sides in a frame structure, wherein the arm is adapted to rotate about its vertical axis.

Such an apparatus according to US-A-4,242,025 has a substantial size due to this expensive structure necessitating a relatively large building space, restricting the placement and assembly in a working space. This apparatus is also characterised by a small range of action. The frame also serves to ensure the stability of the column during operation.

An object of the invention is to remove the above disadvantages and to provide an apparatus for loading and/or unloading stacked products which has a cost effective, compact and above all a very stable structure and which is very flexible in respect of the range of action and possible applications.

The apparatus according to one aspect of the invention is characterised in that the column is mounted to rails, and in that the control and drive devices necessary for operating the apparatus is received in the column.

Due to these features, the column of the apparatus can be made to function independently which enables a more versatile and flexible use of the apparatus in which the structure does not restrict the range of action. Nonetheless it is possible that the invention provides an apparatus for loading an/or unloading stacked products having a small and above all stable structure.

In one embodiment of the apparatus, in which the column is mounted on rails, the stable structure and the independent functioning of the apparatus is enabled in that the column comprises on its lower side means to engage the rails in a gripping manner, i.e. closed by shape. This can for instance be obtained by four disks rotatable in a horizontal plane, the circumference of which comprises a groove, wherein with each rail the groove of two disks abut the outer side of that rail, and at least one disk is driveable.

Furthermore, the apparatus according to the invention is characterised in that the support is displaceable in transverse direction relative to the arm. This provision enables an additional freedom of movement and a more versatile operation.

For an improved and above all controlled manipulation of vulnerable products, for example egg trays, an embodiment of the apparatus according to the invention is characterised in that a partition is fixed to the arm and extends at least partially the width of the support, said partition being displaceable in transverse direction relative to the arm.

The apparatus according to the invention operates in such manner that, for unloading stacked products present on the support the control and drive devices position the partition against these stacked products and then remove the support from underneath these stacked products. Such particular operation according to the invention is also embodied in methods for loading and/or unloading stacked products, which are defined in the claims.

The invention will now be further explained with reference to a drawing in which:
Figures 1a, 1b, 1c and 1d show an embodiment of the apparatus according to the invention;
Figure 2a and 2b show a detail of the apparatus of Figures 1a, 1b and 1c;
Figure 3 shows another detail of an apparatus of Figure 1a, 1b and 1c;
Figure 4 shows a further detail of an apparatus according to Figures 1a, 1b and 1c.

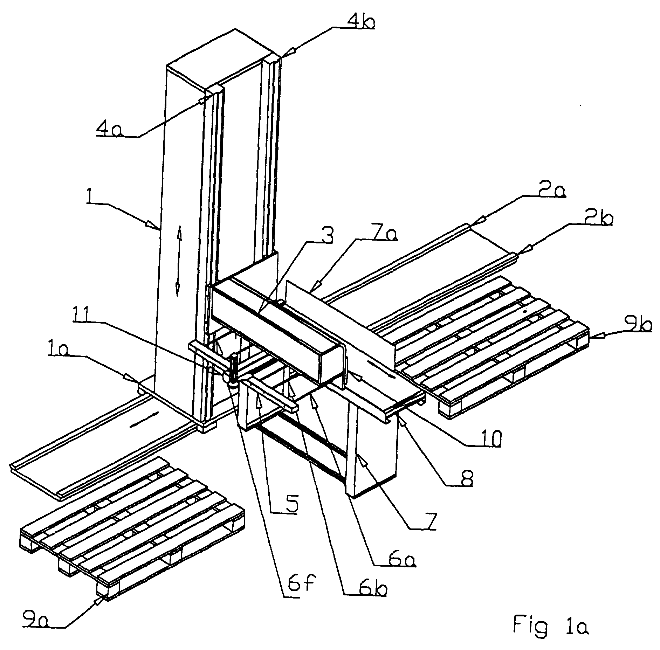

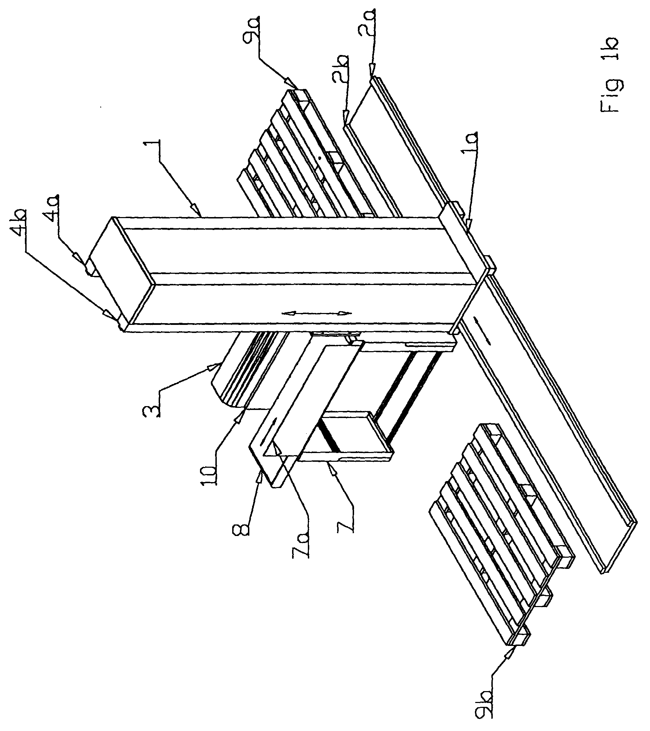

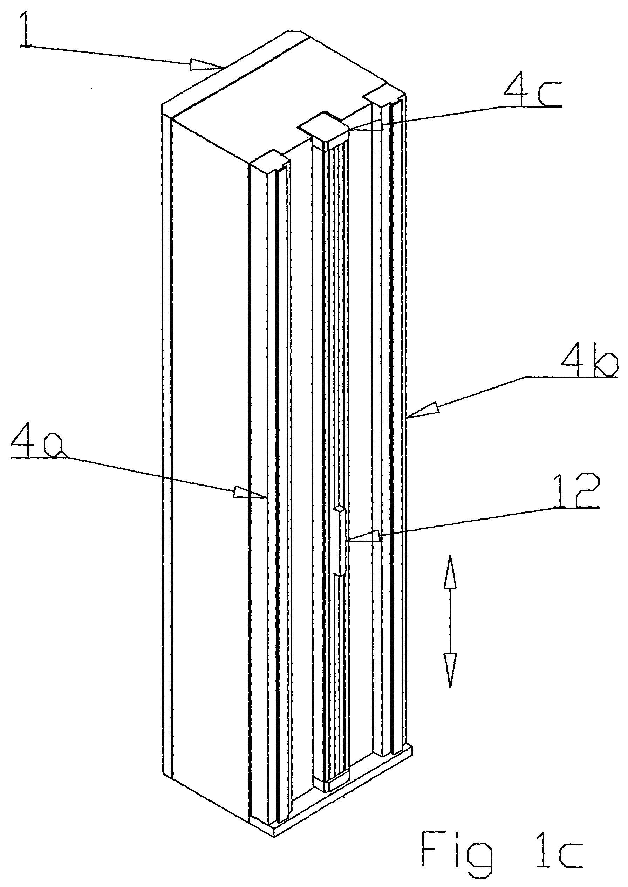

Figures 1a, 1b and 1c show an embodiment of an apparatus for loading an/or unloading stacked products according to the invention. The apparatus is formed by a column 1 having its base 1a positioned on a pair of rails 2a and 2b positioned on the floor parallel to each other. An arm 3 is fixed to the column 1 and is guided along a pair of guides 4a and 4b, said arm being displaceable up and down along the column in a manner to be described. The arm 3 comprises a support 5 for receiving the stacked products, that support 5 being equipped with a plurality of horizontal pins 6a-6f. The support 5 together with the pins 6a-6f are displaceable in horizontal direction relative to the arm 3 by means of a drive 11, for example an electric motor, pressurised air cylinder, a piston rod free cylinder or a capstan drive.

A partition 10 is mounted to the arm 3 and extends at least partially through the width of the support 5, said partition being displaceable in transverse direction relative to the arm, that is in the same direction of movement as the support 5. The function of the partition 10 will be explained further on.

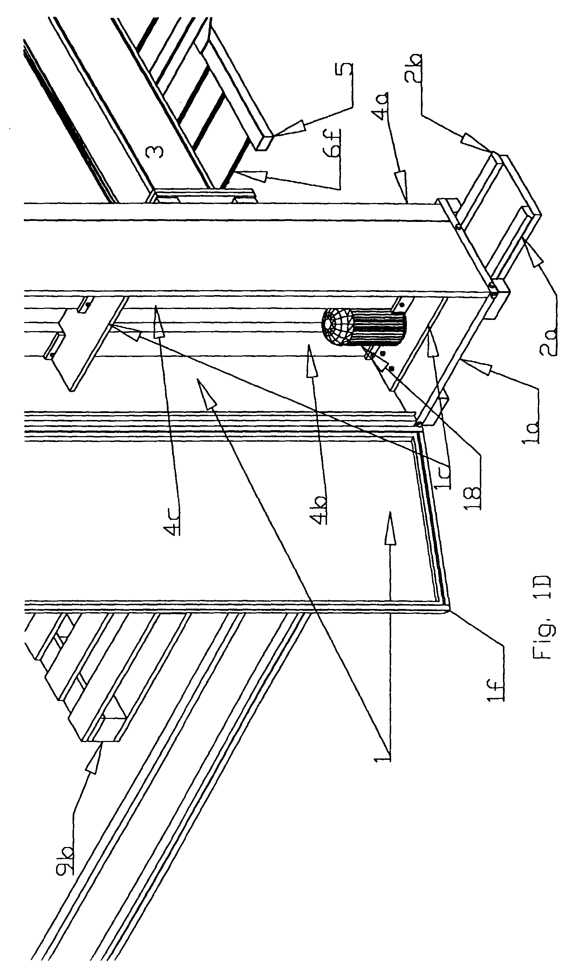

Figure 1 further shows a transport station 7 comprising an endless driveable belt 8 extending along rollers.

The stacked products to be handled are supplied or discharged on the conveyor belt 8. The station 7 further comprises a partition 7a extending beside the belt 8.

The apparatus for loading an/or unloading stacked products according to the invention operates as follows. For loading one or more pallets 9a or 9b, the stacked products, for example a predetermined number of egg trays, are transported on the conveyor belt 8 in the direction of the column 1. By means of suitable sensors (not shown) for example feel sensors or photocells, which may be positioned on the transport station 7 or on the arm 3, the control device of the apparatus detects the presence and the exact position of the egg trays on the conveyor belt 8. After the egg trays are correctly positioned with respect to the support 5 on the conveyor belt 8, the egg trays or products are urged against the partition 7a of the transport station 7 by means of the displaceable partition 10. Then the support 5 is driven by the drive 11 through the control device, so that the pins 6a-6f move below the egg trays. After that, the control device will control the drive for the arm 3 (not shown) received in the column 1 so that the arm 3 is moved upwardly along the guides 4a and 4b, wherein the support 5 lifts the egg trays by the pins 6. The fixation of the products between partition 10 of the arm 3 and the partition 7a of the transport station 7 prevents the products from being displaced and/or damaged during reception of these products of the support 5.

The drive of arm 3 may consist of a displaceable piston rod free cylinder, a belt drive, a capstan drive or an other suitable displacement mechanism. The drive may also take place through the guides 4a and 4b or, as shown in figure 1c, through a drive rail 4c positioned between guides 4a and 4b. The cam 12 positioned in drive rail 4c is connected to arm 3 and may be displaced along guide rail 4c by the drive means discussed above.

A very suitable drive mechanism for the arm 3 is a stepping motor. This not only allows an exact positioning of the arm with respect to the column 1, it also enables a controlled displacement of arm 3, which is very desirable when treating vulnerable products such as eggs. Preferably, the drive is a piston rod free cylinder. The compressed air for driving this cylinder also has a damping influence on the displacement of arm 3.

During upward displacement of arm 3 along the column 1, the stacked products rest on pins 6a-6f of support 5. After the arm is released from transport station 7, the column 1 will move over rails 2a and 2b in an independent manner in a direction to pallets 9a or 9b, dependent on the desired stacking. The control device and drive of the apparatus will then move arm 3 downwardly and these stacked products will be positioned on the respective pallet. Then the arm 3 and column 1 will be moved back to the original position, as shown in Figure 1a, were new stacked products, supplied through the conveyor belt 8, may be received by support 5. From there the cycle starts all over.

As mentioned above, arm 3 is preferably driven by a stepping motor. To ensure also a controlled and safe displacement of the column, the drive of column 1 over rails 2a and 2b is preferably also constructed as a stepping motor. As a result, pallet 9a or 9b may be loaded in a quick and safe manner, wherein subsequent stacked products are positioned in the right position and in several layers. Damages to or rejection of stacked products are minimised in this manner.

Column 1 is preferably constructed of stainless steel plate parts. Figure 1d shows that guides 4a and 4b (and optionally 4c) on the inner side of column 1, together with the plate parts are assembled into a robust and stable yet light and compact structure by means of a number (for example three) horizontally extending bridge elements 1c, such structure being able to withstand torsional and bending loads during operation. Furthermore this simple and cost effective structure also provides sufficient room for receiving the necessary operating control and drive devices. The plate part on the side of the column facing away from the arm 3 may possibly be constructed as a door giving access to the control and drive devices in column 1. These devices may be provided on the inner side of the door.

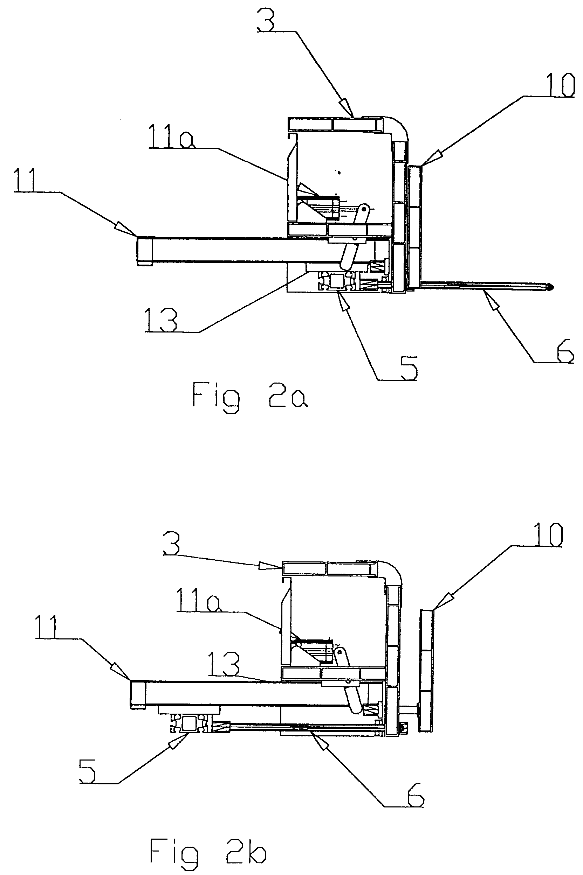

Figures 2 and 2b show the specific structure of the arm 3 of the apparatus according to the invention. Although not shown, the stacked products, which should be moved from the conveyor belt 8 to the pallet 9a or 9b, rest on pins 6 of arm 5. By means of the control and the stepping motor of the apparatus, the column 1 and arm 3 are positioned such that the stacked products on the pins 6 are just beside the position in which they should be placed. As shown in figure 2a, partition 10 abut arm 3. To deposit the stacked products in the desired position in an exact and damage free manner, the control device controls a drive 11a, for example an air cylinder, enabling the lever assembly 13 to move partition 10 a certain distance against the stacked products on the pins 6. This position of partition 10 is shown in figure 2b. The products will now be moved by the partition a small distance over pins 6a-6f to the exact position of deposit, possibly in contact with products deposited before. The displacements of the products by partition 10 a small distance over pins 6a-6f against the already deposited products, if any, ensures a stable positioning of the stacked products. Thereafter, the drive 11 will withdraw support 5 and pins 6 from underneath these stacked products, whereafter the stacked products will remain in the desired position. Then the drive 11a will move partition 10 back against arm 3. By withdrawing the support 5 from under the stacked products and moving the partition 10 back against the arm 3, the products just stacked are released from arm 3 which then may be moved back to transport station 7 without the risk of damage and rejection of these products.

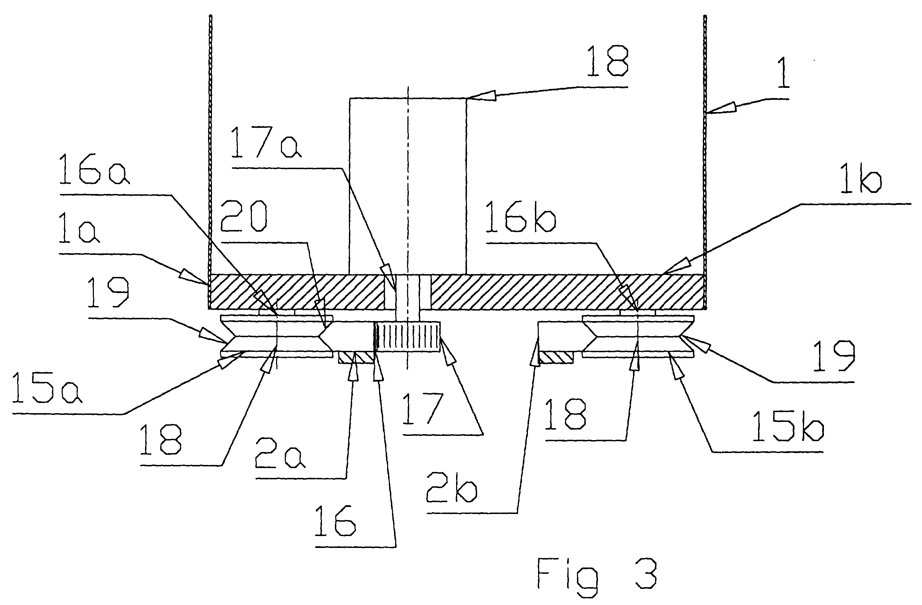

Figure 3 shows in detail the mounting of the column 1 on rails 2a and 2b. Column 1 comprises on its lower side four disks 15a-15d of which two are shown here. Disks 15a-15d are journalled by means of a bearing 16a-16d in the base plate 1b of column 1 and as a result they are rotatable about their axes 18 in a horizontal plane. Disks 15 include in there outer surface a groove 19 co-operating with a corresponding profile 20 of guide rails 2a and 2b. Since the disks 15 abut with there respective grooves the outer side of the rails 2a and 2b there is obtained a mounting of the column 1 on the rails 2a and 2b in a manner closed by shape. Due to this structure, column 1 itself is very stable and therefore resistant to heavy loads on arm 3. The risk of the apparatus tipping over during operation is eliminated despite the fact that the column is in engagement with the rails in locations within or close to the circumference of the column. The apparatus thus take up very little (floor) space without the risk of instability.

If desired, one ore more disks 15a-15d can be driven in order to displace the column 1 over rails 2a and 2b. A very reliable drive, with which column 1 may be displaced in a safe and controlled manner, but also for positioning, it is shown in figure 3. Rail 2a comprises a toothing 16 provided on the side facing rail 2b, said toothing 16 co-operating with a toothed wheel 17. The toothed wheel 17 is rotatable in a horizontal plane and is coupled through a shaft 17a to a motor 18 received in the column. As mentioned before, this motor 18 is preferably a stepping motor enabling a exact positing of the column 1 with respect to rails 2a and 2b during operation. Stepping motor 8 is controlled by a control device received in column 1 but not shown.

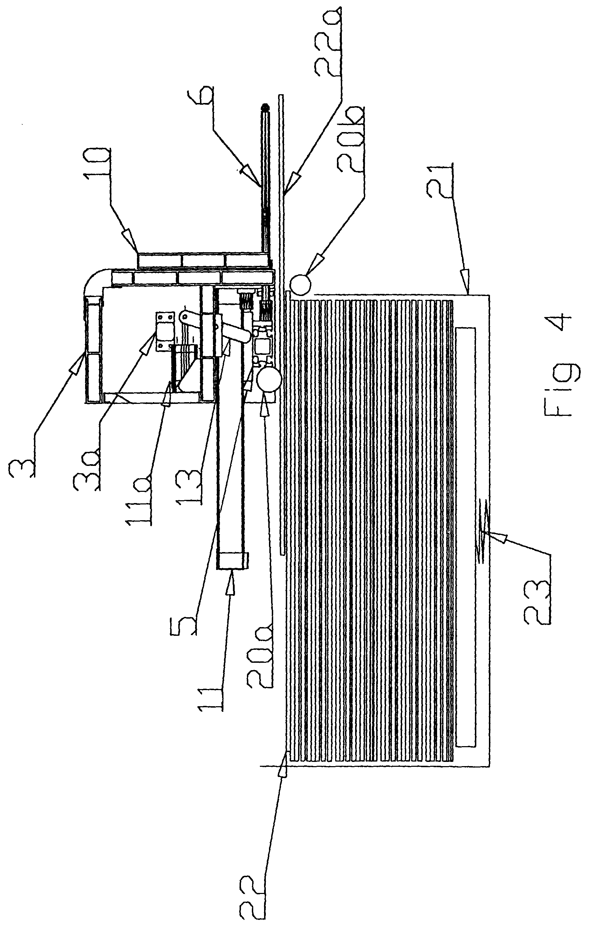

Figure 4 shows an other embodiment of arm 3 for use in the apparatus according to the invention. When handling stacked products, they are stacked in several layers. In order to obtain a high but stable stack and to minimise the risk of damage and rejection of stacked products, subsequent layers are separated by means of a sheet of packing cardboard. Such a sheet of packing cardboard normally is positioned by hand on the layer of stacked products after completion thereof. Arm 3 of the apparatus of the invention enables an automation thereof. For this purpose, arm 3 co-operates with a stack of sheets of packing cardboard 22, which are placed in a tray 21. A spring 23 pushes the stack of sheets 22 upwardly. The arm 3 comprises a plurality of rotatable wheels 20a and 20b which are driven in a suitable manner. The rotation of wheels 20a and 20b brings sheet 22a to a position below support 5 and pins 6 under the influence of the friction between the rollers and sheet 2a. Sheet 22a may then be clamped by additional means provided on arm 3. Arm 3 then moves the sheet of packing cardboard 22a carried along by wheels 20a and 20b in a direction to the stack of products, where it is positioned above the layer of stacked products which is just completed. Then the arm 3 is moved back to the conveyor belt 8 for receiving the next batch of stacked products which are then disposed on the sheet of packing cardboard 22a just positioned. This additional movement of arm 3 may be omitted if arm 3 simultaneously carries a sheet of packing cardboard 22a and displacing the next batch of stacked products on pins 6. After covering the just completed layer by the sheet 22a, immediately thereafter the stacked products present on pins 6 may be positioned on sheet 22a. As an alternative for carrying along a sheet 22a, arm 3 may comprise one or more suction cups if desired, which are provided below the arm and are adapted to take up and displace the sheet of packing cardboard 22a by means of vacuum. A sheet 22a may be carried along by an endless carrier provided over two drums, for example a rubber conveyor belt, instead of by wheel 20a.

Arm 3 further comprises a temporary locking device 3a, for example a driven rod which may be positioned in an opening of column 1 thereby fixing the position of arm 3 relatives to column 1 at the position of transport station 7. This fixation enables support 5 and pins 6a-6f to receive stacked products present on conveyor belt 8 in a movement free manner without damage or rejection. After receiving the stacked products on support 5, the locking device 3a is released, whereafter the arm 3 is moved along column 1.

Although pallets 9a and 9b are shown in figures 1a and 1b as being positioned close to the supply station 7, it will be obvious that the completely independent operation and displacement of column 1 over rails 2a and 2b enables an unlimited range of action of the apparatus of the invention. Due to the stable mounting on the rails as well as by the control and drive devices received in column 1, the apparatus is completely independent and may therefore displace stacked products received from conveyor belt 1 along greater distances. Due to its structure, the apparatus requires only little mounting space and its simple placement and assembly in an working room offer much improved and extended ways of use.

The apparatus is preferably controlled by a PLC, in which the equipment to program the apparatus is provided in column 1. This allows a simple access to and adjustment of the apparatus without the necessity of all kinds of peripheral equipment, which should be positioned somewhere in the working room. Since all control and drive devices are received in column 1, it is sufficient to use one connection cable for power supply to the apparatus. If (parts of) the drive of column 1 or arm 3 are pneumatically actuated, the apparatus 1 requires not only a power supply cable but also a pressurised air line.

The exact height at which the arm 3 should deposit the products present on support 5 onto the stack is controlled by sensors or photocells. These sensors may be provided with predetermined spacings on the column and in particular on at least of guides 4a, 4b or 4c. These sensors are actuated one by one through the moving arm, so that the control may interrupt the displacement of arm along the column timely on the correct height.

It will be clear that the apparatus is not only suited for picking up stacked products from the conveyor belt 8, being displaced over rails 2a and 2b and stacking the stacked products on a certain place, but the apparatus may also be used in a reversed manner to unstack an already created stack of products and to transport these stacked products through arm 3 to the conveyor belt 8 where they are displaced further.

The invention is not restricted to the embodiments shown in the drawing and described hereinbefore. For example, it is possible to suspend the column from rails which are mounted at a distance above ground level. In that case the structure of the suspension means will be diiferent from the disk arrangement shown in the drawings.

## Claims

1. Apparatus for loading and/or unloading stacked products, for example egg trays onto and/or from a pallet, comprising a column displaceable in horizontal direction, a horizontally positioned arm displaceable along the column in vertical direction and including a support for receiving the stacked products, as well as means for supplying and/or discharging the stacked products, **characterised in that** the column is mounted to rails, and in that the control and drive devices necessary for operating the apparatus are received in the column.

2. Apparatus according to claim 1, **characterised in that** the column is in engagement with the rails in locations within or close to the circumference of the column.

3. Apparatus according to claim 1 or 2, **characterised in that** the column is mounted on rails and comprises on its lower side means for gripping the rails in a manner closed by shape, such as four disks rotatable in the horizontal plane, the circumference of which comprises a groove, wherein with each rail the groove of two disks abut the outer side of that rail.

4. Apparatus according tot claim 3, **characterised in that** at least one disk is drivable.

5. Apparatus according to one of the preceding claims, **characterised in that** the column comprises on its lower side a drivable toothed wheel rotatable in a horizontal plane, of which the toothing co-operates with a toothing provided on the side of at least one rail facing the other rail.

6. Apparatus according to one of the preceding claims, **characterised in that** the support is displaceable in transverse direction relative to the arm.

7. Apparatus according to claim 6, **characterised in that** a partition is fixed to the arm and extends at least partially the width of the support, said partition being displaceable in transverse direction relative to the arm.

8. Apparatus according to claim 7**, characterised in that**, for unloading stacked products present on the support, the control and drive devices position the partition against these stacked products and then remove the support from underneath these stacked products.

9. Apparatus according to one of the preceding claims, **characterised in that**, below the plane formed by the support, there are provided means for displacing a sheet of packing cardboard possibly simultaneously with the stacked products.

10. Apparatus according to claim 9, **characterised in that** the means includes at least one suction cup, which can adhere to the sheet of packing cardboard by means of vacuum.

11. Apparatus according to claim 9, **characterised in that** the means includes at least one rotatable wheel for displacing the sheet of packing cardboard by means of friction.

12. Apparatus for loading and/or unloading stacked products, for example egg trays onto and/or from a pallet, comprising a column displaceable in horizontal direction, a horizontally positioned arm displaceable along the column in vertical direction and including a support for receiving the stacked products, as well as means for supplying and/or discharging the stacked products, **characterised in that** the support is displaceable in transverse direction relative to the arm, and in that a partition is mounted to the arm and extends at least partially the width of the support, said partition being displaceable in transverse direction relative to the arm.

13. Method of picking up stacked products, for example egg trays from a conveyor, wherein a column is displaced in horizontal direction to a first position next to the conveyor, a horizontally positioned arm is displaced along the column in vertical direction to a position in which a support of the arm is able to receive the stacked products, a partition mounted to the arm is then positioned against these stacked products and moves the stacked products relative to the arm such that the stacked products are urged against a stop of the conveyor, the support is then moved underneath these stacked products, which are held in position by the partition and the stop.

14. Method of unloading stacked products, for example egg trays onto a pallet, wherein a column is displaced in horizontal direction to a first position, a horizontally positioned arm is displaced along the column in vertical direction to a position in which a support of the arm which receives the stacked products, is positioned above the pallet such that the stacked products rest on the pallet, a partition mounted to the arm is then positioned against these stacked products and the support is removed from underneath these stacked products which are held in position by the partition.
